# EUROPEAN PATENT APPLICATION

(11) **EP 4 393 855 A1**
(43) Date of publication of application: **03.07.2024**
(21) Application number: 22860918.6
(22) Date of filing: 30.05.2022
(51) Int. Cl.: B65G 54/02, G01N 35/04

(54) **SAMPLE CONVEYANCE DEVICE AND SAMPLE CONVEYANCE METHOD**

(30) Priority: 24.08.2021 JP 2021136584
(71) Applicant: HITACHI HIGH-TECH CORPORATION, Tokyo 105-6409 (JP)
(72) Inventor: HOMMA Shotaro, Tokyo 105-6409 (JP); ONIZAWA Kuniaki, Tokyo 105-6409 (JP); SHIGA Yuichiro, Tokyo 105-6409 (JP)
(74) Representative: MERH-IP Matias Erny Reichl Hoffmann Patentanwälte PartG mbB
(86) International application number: PCT/JP2022/021902
(87) International publication number: WO 2023/026622

(57) **Abstract**

To provide a sample conveying device capable of estimating a factor that causes a decrease in a conveyance speed of a sample.

There is provided a sample conveying device 1 including a conveying container 11 that includes a magnet 10 or magnetic material and contains a sample, a conveyance unit in which a plurality of magnetic poles 25, each of which includes a core 22 and a coil 21, are arranged and the conveying container 11 is moved on a conveying surface 12, a control unit 40 that controls a voltage applied to the plurality of magnetic poles 25, detects a position of the conveying container 11 on the conveying surface 12, and controls movement of the conveying container 11, in which the control unit 40 detects an amplitude of a current flowing through the coil 21 of each of the plurality of magnetic poles 25 when the conveying container 11 approaches each of the plurality of the magnetic poles 25, and determines deterioration of the conveying surface 12 based on the detected amplitude of the current.

## Description

### Technical Field

The present invention relates to a sample analysis device and a sample conveying method for analyzing a biological specimen (hereinafter referred to as "sample") such as blood, plasma, serum, urine, and other body fluids.

### Background Art

A sample analysis system for clinical testing performs a test for a specified analysis item on the sample (sample) such as blood, plasma, serum, urine, and other body fluids.

The sample analysis system connects devices having a plurality of functions and automatically executes the processing of each process. That is, to streamline the work in an examination room, an analysis unit (analysis process) that performs a plurality of analyses such as biochemistry and immunology and a pretreatment unit (pretreatment process) that performs a plurality of pretreatments required for the analyses, and the like, are connected via a conveyance line and used as a single sample analysis system.

In recent years, the importance of specimen analysis has increased due to the advance of medical care and the aging of patients. Therefore, to improve the analysis processing capacity of the specimen analysis system, there is a demand for high-speed conveyance, large-volume conveyance, simultaneous conveyance, and multidirectional conveyance of the specimens.

As background technology in the technical field, there is PTL 1.

PTL 1 describes a laboratory specimen delivery system that is very flexible and has high conveyance performance. PTL 1 describes that the laboratory sample delivery system includes several container carriers each including at least one magnetically active device and preferably at least one permanent magnet, and adapted to carry a specimen container containing a specimen, a conveying device, and a control device, in which the conveying device is a conveying surface adapted to convey a plurality of container carriers and several electromagnetic actuators disposed stationary below a conveyance path, the electromagnetic actuator is adapted to move the container carrier disposed above the conveying surface by applying a magnetic force to the container carrier, and the control device is adapted to drive the electromagnetic actuator and adapted to control movement such that three or more container carriers are movable simultaneously and independently of each other (see ABSTRACT).

PTL 1 describes that it is possible to detect, for example, a gradual decrease in the conveyance speed caused by dirt on the conveyance path that causes an increase in frictional force by comparing the scheduled position and the detected position, and the control device increases the magnetic force generated by the electromagnetic actuator when the gradual decrease in the conveyance speed is detected, and/or displays an error message when the conveyance speed is below a given threshold value (see paragraph [0021] of PTL 1).

### Citation List

### Patent Literature

PTL 1: JP2016-166890A

### Summary of Invention

### Technical Problem

PTL 1 describes that a decrease in the conveyance speed caused by dirt on the conveying surface is detected by comparing the scheduled position of the container carrier with the detected position.

However, the laboratory specimen delivery system described in PTL 1 does not describe how to determine the factor that causes a decrease in the conveyance speed. The cause of decrease in conveyance speed is thought to be deterioration of the conveying surface, such as scraping of the conveying surface, in addition to dirt on the conveying surface.

In the technology described in PTL 1, when the cause of the decrease in the conveyance speed is deterioration of the conveying surface, the cause cannot be estimated and appropriate measures cannot be taken.

An object of the present invention is to provide a sample conveying device and a sample conveying method that are capable of estimating a factor that causes a decrease in a conveyance speed of a sample.

### Solution to Problem

To achieve the above object, the present invention is configured as follows.

According to an aspect of the present invention, there is provided a sample conveying device including a conveying container that includes a magnet or magnetic material and contains a sample, a conveyance unit in which a plurality of magnetic poles, each of which includes a core and a coil, are arranged and the conveying container is moved on a conveying surface, a control unit that controls a voltage applied to the plurality of magnetic poles, detects a position of the conveying container on the conveying surface, and controls movement of the conveying container, in which the control unit detects an amplitude of a current flowing through the coil of each of the plurality of magnetic poles when the conveying container approaches each of the plurality of the magnetic poles, and determines deterioration of the conveying surface based on the detected amplitude of the current.

According to another aspect of the present invention, there is provided a sample conveying method including a conveying container that includes a magnet or magnetic material and contains a sample, and a conveyance unit in which a plurality of magnetic poles, each of which includes a core and a coil, are arranged and the conveying container is moved on a conveying surface, controlling a voltage applied to the plurality of magnetic poles, detecting a position of the conveying container on the conveying surface, and controlling movement of the conveying container, the method including detecting an amplitude of a current flowing through the coil of each of the plurality of magnetic poles when the conveying container approaches each of the plurality of the magnetic poles, and determining deterioration of the conveying surface based on the detected amplitude of the current.

### Advantageous Effects of Invention

According to the present invention, it is possible to provide the sample conveying device and the sample conveying method that are capable of estimating the factor that causes the decrease in the conveyance speed of the sample.

Problems, configurations, and effects other than those described above will be made clear by the description of the examples below.

### Brief Description of Drawings

[Fig. 1] Fig. 1 is a schematic configuration diagram of a sample conveying device according to Example 1.
[Fig. 2] Fig. 2 is an explanatory diagram schematically illustrating a cross section and a current amplitude of the sample conveying device according to the Example 1 in time series.
[Fig. 3] Fig. 3 is an explanatory diagram schematically illustrating a cross section and a current amplitude of the sample conveying device according to the Example 1 in time series.
[Fig. 4] Fig. 4 is a flowchart illustrating a flow from calculation of a conveyance path to determination of an abnormality of the sample conveying device according to Example 2.
[Fig. 5] Fig. 5 is a flowchart illustrating a flow from determination of an abnormality in the conveyance path to alarm notification of the sample conveying device according to Example 3.
[Fig. 6] Fig. 6 is a flowchart illustrating a flow from determination of no abnormality in the conveyance path to alarm notification of the sample conveying device according to Example 4.
[Fig. 7] Fig. 7 is a flowchart illustrating a flow from determination of no abnormality in the conveyance path to alarm notification of a conveying device according to Example 5.

### Description of Embodiments

Embodiments of the present invention will be described below with reference to the accompanying drawings.

### Examples

### (Example 1)

First, a schematic configuration of a sample conveying device 1 according to Example 1 will be described.

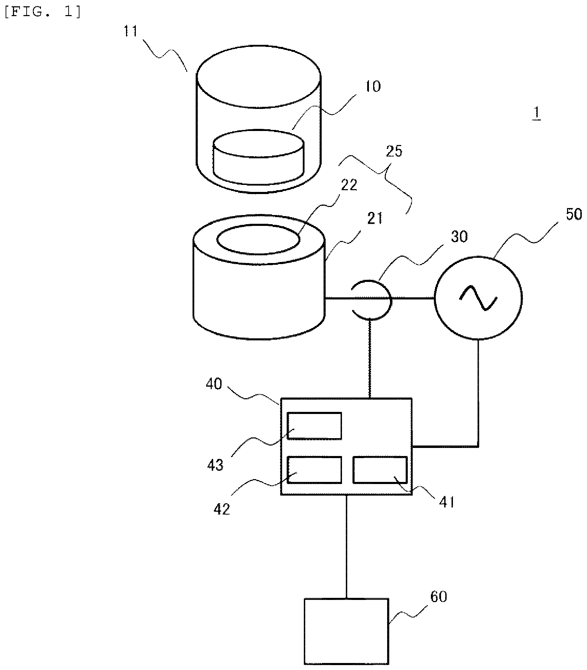

Fig. 1 is an explanatory diagram of a schematic configuration of the sample conveying device 1 according to Example 1.

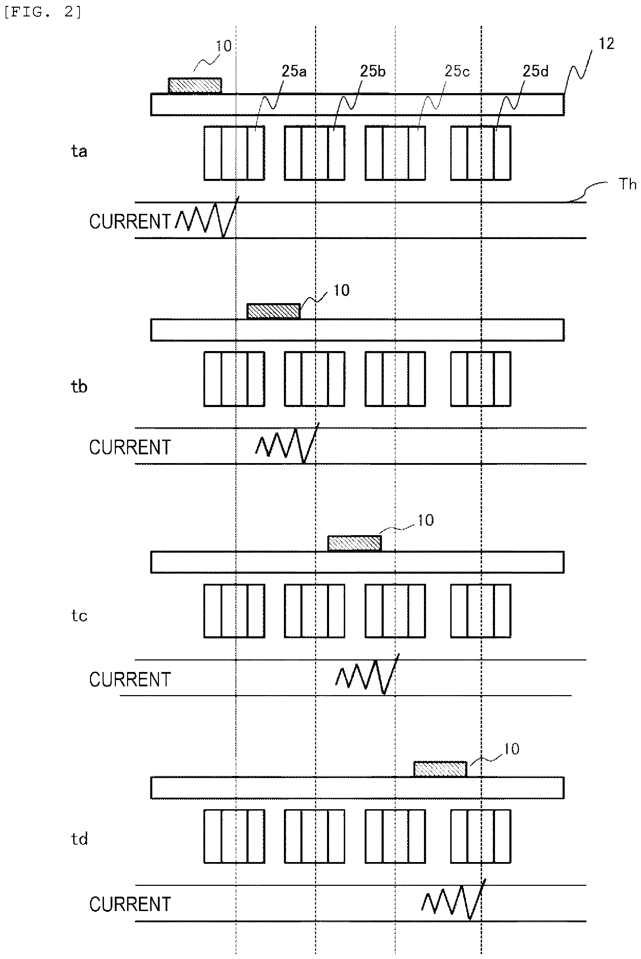

The sample conveying device 1 according to Example 1 includes a conveying surface 12 (illustrated in Fig. 2) of a conveyance path on which a conveying container 11, which is provided with a permanent magnet (or magnetic material) 10 and contains a sample, is moved and conveyed on an upper surface thereof, a position detection unit 30 that detects a position of the conveying container 11 provided with the permanent magnet 10 on the conveying surface 12, a magnetic pole 25 that is disposed below the conveying surface 12 and is provided with a core 22 that is a magnetic material and a coil 21 that is a winding wound around an outer peripheral side of the core 22, a drive unit (drive device that drives the conveying container 11) 50 that applies a voltage to the coil 21 of the magnetic pole 25, and a control unit (control device that controls the drive device) 40 that controls the drive unit 50. A conveyance unit is configured with the conveying container 11, the magnetic pole 25 including the core 22 and the coil 21, and the conveying surface 12.

The control unit 40 includes an operation unit 41 that calculates the conveyance path of the conveying container 11, a moving time estimation unit 42 that calculates the time required for conveyance from information on the conveyance path, and a storing unit 43 that stores the calculated conveyance time. The control unit 40 is connected to a display unit 60.

The magnetic pole 25 and the permanent magnet 10 are disposed to face each other with the conveying surface 12 interposed therebetween. The permanent magnet 10 relatively moves above the magnetic pole 25. That is, the permanent magnet 10 moves above the magnetic pole 25 via the conveying surface 12. As such, the conveying surface 12 is disposed between the magnetic pole 25 and the permanent magnet 10, and the permanent magnet 10 is slidably moved on the conveying surface 12.

The permanent magnet 10 is disposed in the conveying container 11. For example, a permanent magnet 10 made of neodymium or ferrite is used for the permanent magnet 10. Although Example 1 will be described using the permanent magnet 10, other magnets or soft magnetic materials may be used instead of the permanent magnet 10. Instead of the permanent magnet 10, a combination of the permanent magnet 10 and the soft magnetic material may be used.

The term "magnetic material" refers to the permanent magnet 10, other magnets, soft magnetic materials, a combination of the permanent magnet 10 and the soft magnetic material, or the like. In Example 1, description will be made by using the permanent magnet 10 as a representative.

The permanent magnet 10 is disposed on the conveying container 11 such as a container carrier. The conveying container 11 is a sample holder (not illustrated), a sample rack (not illustrated) that holds a plurality of sample holders, or the like. Generally, one sample container for storing the sample is disposed in the conveying container 11. The sample container is then conveyed to a desired position as the permanent magnet 10 moves. That is, the conveying container 11 includes the permanent porcelain 10 and the sample container, and is conveyed on the conveying surface 12.

The sample conveying device 1 applies a voltage to the coil 21 of the magnetic pole 25 to generate electromagnetic force in the core 22, and moves the permanent magnet 10 disposed in the conveying container 11 between a plurality of magnetic poles 25 (between magnetic poles 25 and 25). To efficiently apply electromagnetic force to the permanent magnet 10 and to move the permanent magnet 10 in a target direction, relative position information between the permanent magnet 10 and the magnetic pole 25 is needed.

For example, it is assumed that the permanent magnet 10 is located above (directly above) one of the two magnetic poles 25. Even if a voltage is applied to the magnetic pole 25 (coil 21) with the permanent magnet 10 located directly below, no force (thrust force) in a conveyance direction is generated in the permanent magnet 10. On the other hand, if a voltage is applied to the magnetic pole 25 (coil 21) above (directly above) which the permanent magnet 10 is not located, a force that attracts the permanent magnet 10 to the magnetic pole 25 is generated in the permanent magnet 10, and a force (thrust force) in the conveyance direction is generated.

That is, by applying a voltage to a desired magnetic pole 25 (coil 21), it is possible to efficiently generate a force in the conveyance direction in the permanent magnet 10. By selecting the magnetic pole 25 (coil 21) to which a voltage is applied from among the plurality of magnetic poles 25 (coils 21), the orientation (direction) of the force in the conveyance direction can be controlled.

The position detection unit 30 detects the position of the conveying container 11 provided with the permanent magnet 10 on the conveying surface 12. A pulse voltage is applied to the magnetic pole 25 (coil 21), and a current amplitude is acquired after a certain period of time has elapsed. The current amplitude changes depending on a distance between the magnetic pole 25 (coil 21) and the permanent magnet 10. Specifically, by reducing an interval between the magnetic pole 25 (coil 21) and the permanent magnet 10, the inductance of the magnetic pole 25 (coil 21) is reduced. By reducing the inductance, the rise of current becomes faster and the amplitude thereof increases. If the inductance is large, the rise of the current becomes slow and the amplitude thereof decreases.

That is, the position detection unit 30 can estimate the distance of the permanent magnet 10 with respect to the magnetic pole 25 (coil 21) by detecting a change in current when a voltage is applied to the magnetic pole 25 (coil 21).

In the sample conveying device 1 in Example 1, a thickness of the conveying surface 12 is constant so that the thrust force generated by the magnetic pole 25 (coil 21) is optimal for conveyance. However, due to friction between the upper surface of the conveying container 11 and the conveying surface 12, deterioration such as scraping of the upper surface of the conveying surface 12 may occur.

When the upper surface of the conveying surface 12 is scraped, problems occur such as a change in the frictional force acting between the conveyance container 11 and the conveying surface 12, inclination of the upper surface of the conveying surface 12, a change in the distance between the magnetic pole 25 (coil 21) and the permanent magnet 10, and a change of the thrust force from the optimal state.

The detection of the position of the conveying container 11 by the position detection unit 30 waits for a certain period of time after starting the voltage application to the magnetic pole 25 (coil 21), starts acquiring the current amplitude, and is completed at a point of time when the current amplitude exceeds the threshold value. When the thickness of the upper surface of the conveying surface 12 is constant, it is estimated that the amplitude from the start of acquisition of the current amplitude until the current amplitude exceeds the threshold value is a uniform value at any magnetic pole 25 (coil 21) at any position.

When the upper surface of the conveying surface 12 is scraped, the distance between the magnetic pole 25 (coil 21) and the permanent magnet 10 is reduced, and the current amplitude is increased. Therefore, when the thickness of the upper surface of the conveying surface 12 is reduced due to deterioration, the amplitude at the timing when the acquisition of the current amplitude is started becomes a larger value compared to the amplitude when the upper surface of the conveying surface 12 has a constant thickness.

Fig. 2 is an explanatory diagram schematically illustrating a schematic cross section and a current amplitude of the sample conveying device 1 in Example 1 in time series.

In Fig. 2, in the sample conveying device 1 in Example 1, for example, the permanent magnet 10 moves relative to four magnetic poles 25a, 25b, 25c, and 25d.

The magnetic pole 25a is excited at time ta, the magnetic pole 25b is excited at time tb, the magnetic pole 25c is excited at time tc, and the magnetic pole 25d is excited at time td, thereby generating the thrust force against the permanent magnet 10. The magnetic poles 25a, 25b, 25c, and 25d respectively include the position detection unit 30.

At time ta, when a voltage is applied to the magnetic pole 25a by the drive unit 50 and the magnetic pole 25a is excited, the permanent magnet 10 is attracted to the magnetic pole 25a. The position detection unit 30 acquires the current amplitude in a stage where after a certain period of time has elapsed from the start of excitation. The current amplitude increases as the permanent magnet 10 approaches the magnetic pole 25a. When the current amplitude exceeds a threshold Th, the drive unit 50 stops applying the voltage to the magnetic pole 25a and starts applying the voltage to the magnetic pole 25b.

The position detection unit 30 and the drive unit 50 perform the processing described above on the magnetic poles 25b, 25c, and 25d until the current amplitude of the magnetic pole 25d exceeds the threshold value. When the current amplitude exceeds the threshold value at the magnetic pole 25d, the drive unit 50 excites the magnetic pole 25d until the permanent magnet 10 stops directly above the magnetic pole 25d. In the series of controls described above, the amplitude at the timing when the position detection unit 30 starts acquiring the current amplitude becomes the same value in the magnetic pole 25 of each of the magnetic poles 25a, 25b, 25c, and 25d.

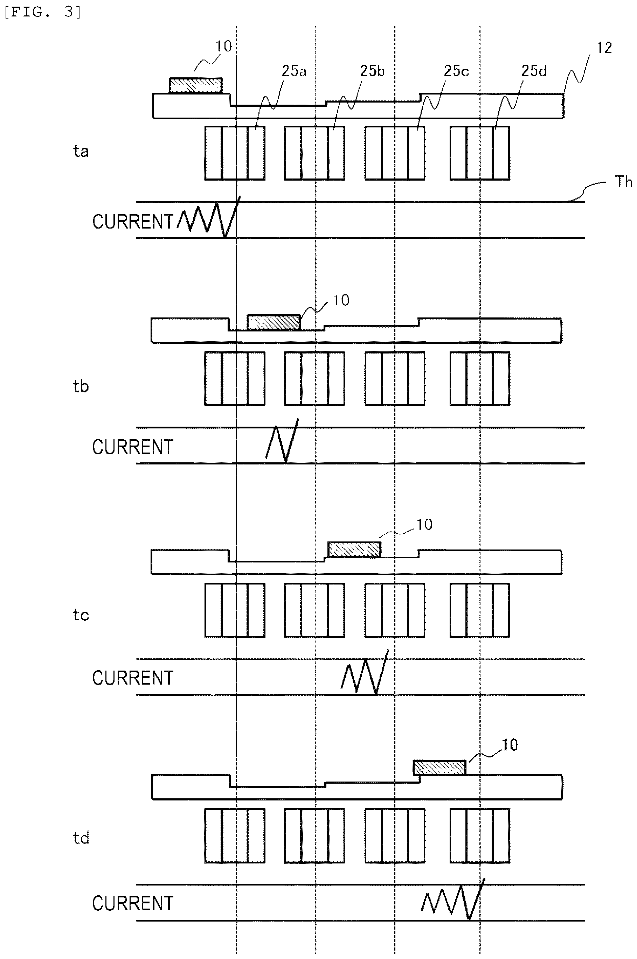

Fig. 3 is an explanatory diagram schematically illustrating a schematic cross section and current amplitude of the sample conveying device 1 in Example 1 in time series. While the upper surface of the conveying surface 12 illustrated in Fig. 2 has a constant thickness, in the example illustrated in Fig. 3, there are positions where the thickness of the upper surface of the conveying surface 12 is different.

In the example of Fig. 3, similar to the example illustrated in Fig. 2, the magnetic pole 25a attracts the permanent magnet 10 at time ta.

At time tb, when the magnetic pole 25b attracts the permanent magnet 10, as the thickness of the upper surface of the conveying surface 12 is smaller, the distance between the permanent magnet 10 and the magnetic pole 25b becomes shorter. If the position detection unit 30 starts acquiring the current amplitude while the distance between the permanent magnet 10 and the magnetic pole 25b is short, the value of the current amplitude becomes larger than that of the magnetic pole 25a.

At time tc, since the distance of the magnetic pole 25c to the permanent magnet 10 is farther than the magnetic pole 25b and closer than the magnetic pole 25a, the amplitude at the start of acquisition of the current amplitude becomes smaller than that of the magnetic pole 25b and larger than the current amplitude of the magnetic pole 25a.

The current amplitude at the timing when the position of each of the magnetic pole 25a, 25b, 25c, and 25d was detected is stored in the storing unit 43 of the control unit 40 and compared by the operation unit 41, thereby making it possible to detect a change in state due to scraping or the like on the upper surface of the conveying surface 12.

That is, the conveying device 1 in Example 1 can detect an abnormality in the conveying device 1 caused by the change in the state of the upper surface of the conveying surface 12 from the value of the current amplitude at the timing when position detection is started.

Therefore, according to the first embodiment, it is possible to provide the sample conveying device and the sample conveying method that are capable of estimating a factor that causes the decrease in the conveyance speed of the sample.

### (Example 2)

Next, the sample conveying device 1 in Example 2 will be explained. Example 2 is an example in which a conveyance time of the conveying container 11 to be conveyed on the upper surface of the conveying surface 12 is calculated and it is determined whether there is any scrape in the conveying surface 12. The overall configuration of the sample conveying device 1 is the same as that in Example 1, and thus illustration and detailed description thereof will be omitted.

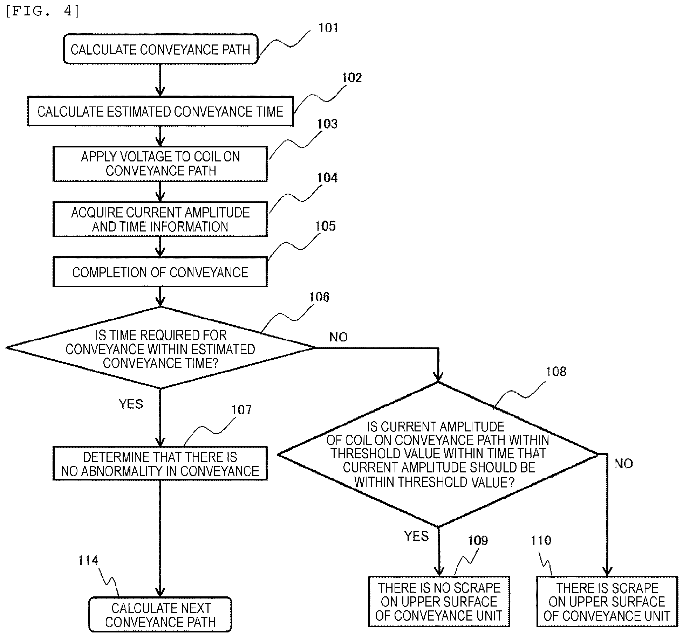

Example 2 will be described using Fig. 4.

Fig. 4 is an operation flowchart of the control unit 40. In Fig. 4, the operation unit 41 calculates the conveyance path to a conveyance destination using a current position of the conveying container 11 as a conveyance source (step 101). The operation unit 41 calculates an estimated conveyance time required for conveyance by using a moving distance on the conveyance path and a theoretical conveyance speed of the conveying container 11, and stores the calculation result in the storing unit 43 (step 102).

The control unit 40 applies a voltage to the magnetic pole 25 (coil 21) of the conveyance unit and starts conveying the conveying container 11 (step 103). The moving time estimation unit 42 acquires the time when a conveyance instruction is transmitted from the control unit 40 to the magnetic pole 25 (coil 21) of the conveyance unit, and the time when the conveying container 11 is detected by the position detection unit 30 at the set conveyance destination (step 104), and acquires the time actually required for conveyance.

When the conveyance of the conveyance container 11 is completed (step 105), the operation unit 41 performs conveyance time determination processing for comparing whether the conveyance time calculated by the moving time estimation unit 42 is shorter than the conveyance time calculated in step 102 and stored in the storing unit 43 (step 106). In step 106, when the conveyance time calculated by the moving time estimation unit 42 is shorter than the conveyance time calculated in step 102, the operation unit 41 determines that there is no abnormality in conveyance (step 107), and calculates the next conveyance path (step 114).

In step 106, when the conveyance time calculated by the moving time estimation unit 42 is longer than the conveyance time calculated in step 102, the operation unit 41 refers to the current amplitude of the magnetic pole 25 (coil 21) used for conveyance, and performs abnormality detection (deterioration determination) on the upper surface of the conveying surface 12 as described in Example 1 (step 108).

In step 108, the operation unit 41 determines whether the current amplitude of the coil on the conveyance path was within the threshold value during a time that the current amplitude should be within the threshold value.

When the current amplitude of the coil on the conveyance path is within the threshold value during the time that the current amplitude should be within the threshold value, the operation unit 41 determines that there is no scrape on the upper surface of the conveying surface 12 (step 109).

In step 108, when the current amplitude of the coil on the conveyance path is not within the threshold value during the time that the current amplitude should be within the threshold value, it is determined that the upper surface of the conveying surface 12 is scraped (step 110).

In Example 2, as in Example 1, it is possible to provide the sample conveying device and the sample conveying method that are capable of estimating a factor that causes the decrease in the conveyance speed of the sample.

### (Example 3)

Next, the sample conveying device 1 in Example 3 will be described. Example 3 is an example in which processing is executed in the sample conveying device 1 when it is determined that there is an abnormality on the upper surface of the conveying surface 12. The overall configuration of the sample conveying device 1 is the same as that in Example 1, and thus illustration and detailed description thereof will be omitted.

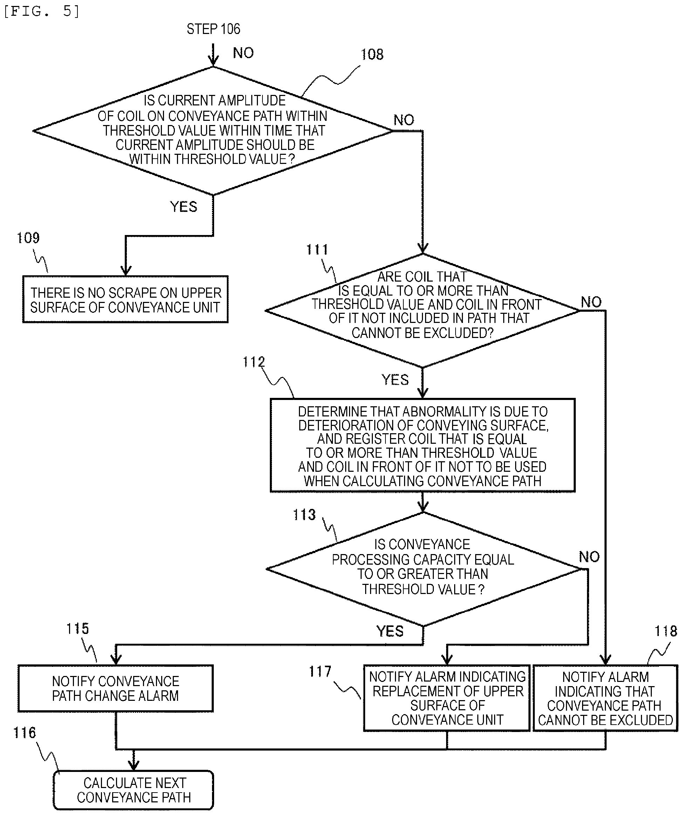

Example 3 will be described using Fig. 5.

Fig. 5 is an operation flowchart of the control unit 40. In Example 3, the processing when the determination result in step 108 is No is different from the example illustrated in Fig. 4, and the other steps are the same. Therefore, the steps when the determination result in step 108 is No will be described.

In step 108, when the current amplitude of the coil 21 of the magnetic pole 25 on the conveyance path exceeds the threshold value and it is detected that there is an abnormality on the upper surface of the conveying surface 12 (when the determination result is No), the operation unit 41 determines whether the conveyance path used for conveyance does not include a path that cannot be excluded (step 111). In the conveyance unit, conveyance paths that have a specific function in the system exist. For example, the conveyance paths include a conveyance path in which a sensor for reading an ID of the conveying container 11 is disposed, and a conveyance path that serves as an entrance and exit for the analysis device and system itself. The conveying container 11 cannot be allowed to bypass such conveyance paths.

In the operation unit 41, such conveyance paths are registered in the storing unit 43 as paths that cannot be excluded. When it is determined in step 111 that the path that cannot be excluded is included, the conveyance path is not excluded, and an alarm indicating that the conveyance path cannot be excluded is displayed on the display unit 60 to notify the user (step 118). Then, the next conveyance path is calculated (step 116) .

In step 111, when the conveyance path that cannot be excluded is not included, among the magnetic poles 25 used for the conveyance, the magnetic pole 25 whose current amplitude exceeds the threshold value and the magnetic poles 25 in front (on the upstream side) thereof are determined to be unusable as the conveyance path and are registered (stored in the storing unit 43) (step 112). That is, the magnetic pole 25 (coil 21) disposed at a position corresponding to the conveying surface 12, where it determined that there is the deterioration, and the magnetic pole 25 (coil 21) disposed upstream thereof are excluded from the conveyance path of the conveying container 11. The magnetic pole 25 (coil 21) whose current amplitude exceeds the threshold value is the magnetic pole 25 (coil 21) disposed at a position corresponding to the conveying surface 12, where it determined that there is the deterioration.

Similar to Example 2, the operation unit 41 calculates the time required for conveyance (estimated conveyance time). That is, a processing capacity of the conveying container 11 in the conveyance unit can be calculated from the time required for conveyance in one conveying container 11. The processing capacity of the conveying container 11 indicates the number of conveying containers 11 that one conveyance unit can process per unit time. The processing capacity required for the conveyance unit varies depending on the position of the conveyance unit in the system.

In step 112, when the conveyance path having deterioration is registered as unusable, the operation unit 41 calculates the conveyance path under a new restriction (restriction that excludes the conveyance path having deterioration). Then, the processing capacity of the conveyance unit is calculated from the time required for conveyance. The operation unit 41 determines whether the newly calculated conveyance processing capacity is equal to or greater than a threshold value required for the conveyance unit (step 113) .

In step 113, when the conveyance processing capacity is equal to or greater than the threshold value, since it is possible to change the conveyance path to a conveyance path obtained by excluding the conveying surface 12 having deterioration, the operation unit 41 notifies the user by displaying a conveyance path change alarm on the display unit 60 (step 115). Then, the next conveyance path is calculated (step 116).

In step 113, when the conveyance processing capacity is less than the threshold value, since the upper surface of the conveying surface 12 having deterioration needs to be replaced and used, the operation unit 41 notifies the user by displaying a replacement alarm indicating that the upper surface of the conveying surface 12 having deterioration of the conveyance unit needs to be replaced on the display unit 60 (step 117). Then, the next conveyance path is calculated (step 116).

As described above, according to Example 3, it is possible to provide the sample conveying device and the sample conveying method that can notify the user of change of the conveyance path or replacement of the upper surface of the conveying surface 12 when it is determined that there is an abnormality on the upper surface of the conveying surface 12, in addition to being able to obtain the same effects as in Example 1.

### (Example 4)

Next, the sample conveying device 1 in Example 4 will be described. Example 4 is an example in which the sample conveying device 1 executes processing when the conveyance time of the conveying container 11 exceeds the conveyance time calculated by the operation unit 41, an abnormality detection is performed on the upper surface of the conveying surface 12, and it is determined that there is no abnormality on the upper surface of the conveying surface 12 as described in Example 2. The overall configuration of the sample conveying device 1 is the same as that in Example 1, and thus illustration and detailed description thereof will be omitted.

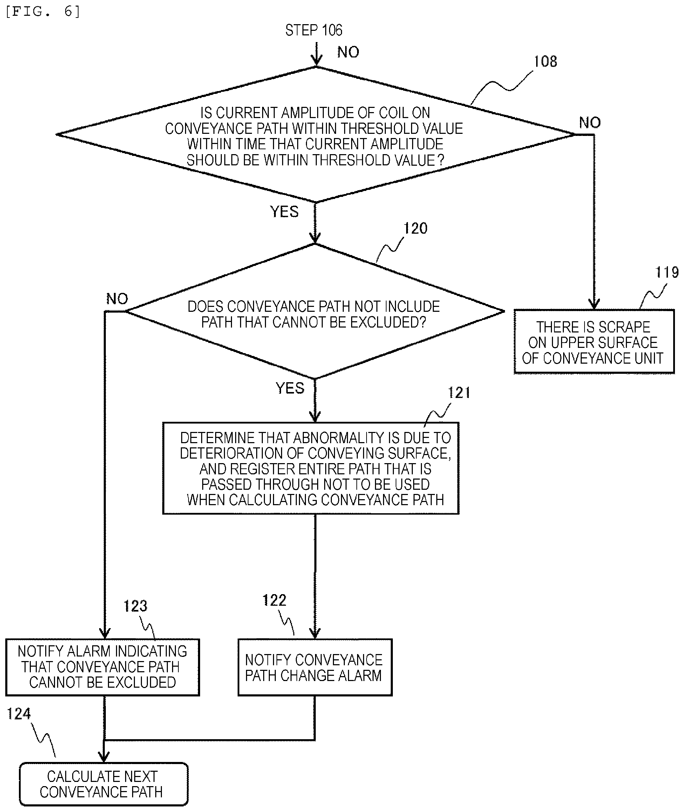

Example 4 will be described using Fig. 6.

Fig. 6 is an operation flowchart of the control unit 40. In Example 4, the processing when the determination result in step 108 is No is different from the example illustrated in Fig. 4, and the other steps are the same. Therefore, the steps when the determination result in step 108 is No will be described.

In step 108, when it is determined that the current amplitude of the coil 21 of the magnetic pole 25 on the conveyance path is within the threshold value and there is no abnormality on the upper surface of the conveying surface 12, the operation unit 41 determines whether the conveyance path used for conveyance does not include the path that cannot be excluded (step 120).

In step 120, when it is determined that the path that cannot be excluded is included, the conveyance path is not excluded, and an alarm indicating that the conveyance path cannot be excluded is displayed on the display unit 60 to notify the user (step 123). Then, the next conveyance path is calculated (step 124).

In step 120, when the path that cannot be excluded is not included, it is determined that the abnormality is due to the presence of an obstacle on the conveying surface 12, and the entire conveyance path that is passed through is registered in the storing unit 43 to not be used when calculating the conveyance path (step 121). The change of the conveyance path due to the obstacle is displayed as an alarm on the display unit 60 to notify the user (step 122). Then, the next conveyance path is calculated (step 124).

In step 108, when the current amplitude of the coil 21 of the magnetic pole 25 on the conveyance path exceeds the threshold value, it is determined that there is a scraping abnormality on the conveying surface 12, and the process proceeds to step 119. In step 119, it is possible to display on the display unit 60 that there is the scraping abnormality on the conveying surface 12.

As described above, according to Example 4, it is possible to provide the sample conveying device and the sample conveying method that can notify the user of the change or replacement of the conveyance path not only when it is determined that there is an abnormality on the conveying surface 12, but also when there is an obstacle on the conveying surface 12, in addition to being able to obtain the same effects as in Example 1.

### (Example 5)

Next, the sample conveying device 1 in Example 5 will be described. In Example 5, steps 106 and 107 in Example 2 are omitted, and the process proceeds from step 105 to step 108. When the determination result in step 108 is NO, steps 111 to 113 and 115 to 118 in Example 3 are executed. When the determination result in step 108 is YES, steps 120 to 123 in Example 4 are executed, and step 116 is executed.

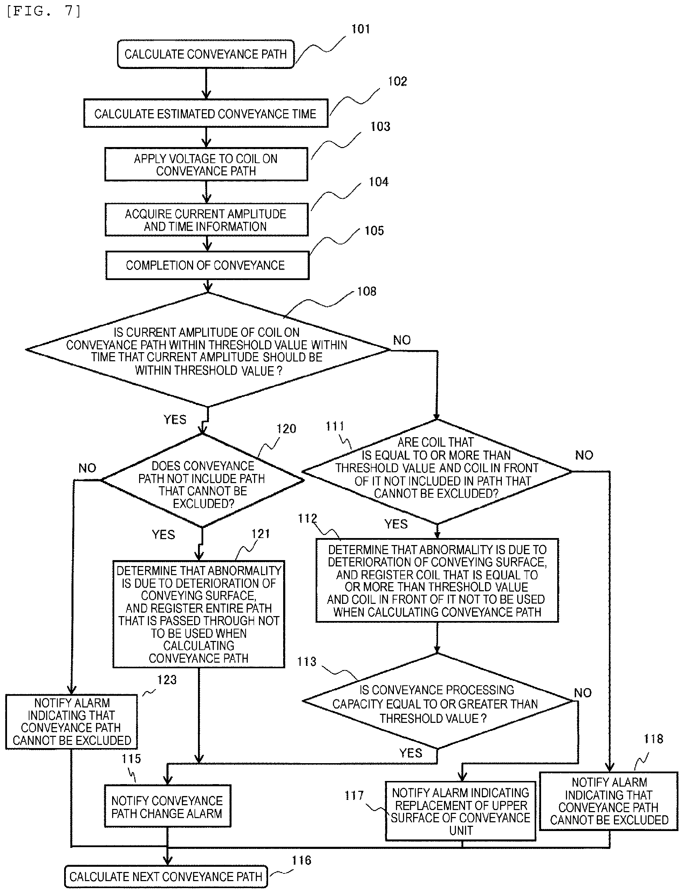

The processing contents at the step numbers in Fig. 7 are the same as the processing contents at the step numbers illustrated in Figs. 4, 5, and 6, and thus detailed description thereof will be omitted.

According to Example 5, the effects of Example 3 and the effects of Example 4 can be obtained.

### Reference Signs List

1: sample conveying device
10: permanent magnet
11: conveying container
12: conveying surface
21: coil
22: core
25, 25a, 25b, 25c, 25d: magnetic pole
30: position detection unit
40: control unit
41: operation unit
42: moving time estimation unit
43: storing unit
50: drive unit
60: display unit
101, 114, 116, 124: conveyance path calculation processing step
102: estimated conveyance time calculation processing step
103: processing step of applying voltage to coil on conveyance path
104: current amplitude and time information acquisition processing step
105: conveyance completion processing step
106: conveyance time determination processing step
107: conveyance unit normality determination processing step
108: current amplitude determination processing step
109: processing step of determining that there is no scrape on upper surface of conveyance unit
110, 119: processing step of determining that there is scrape on upper surface of conveyance unit
111: processing step of determining whether coil exclusion is possible
112: processing step of setting conveyance path for deterioration abnormality
113: conveyance processing capacity determination processing step
115, 122: conveyance path change alarm notification processing step
117: conveying surface replacement alarm notification processing step
118, 123: processing step of notifying that coil exclusion is not possible
120: processing step of determining whether conveying path exclusion is possible
121: processing step of setting conveyance path for obstacle foreign matter deterioration abnormality

## Claims

1. A sample conveying device comprising:
a conveying container that includes a magnet or magnetic material and contains a sample;
a conveyance unit in which a plurality of magnetic poles, each of which includes a core and a coil, are arranged and the conveying container is moved on a conveying surface; and
a control unit that controls a voltage applied to the plurality of magnetic poles, detects a position of the conveying container on the conveying surface, and controls movement of the conveying container, wherein
the control unit detects an amplitude of a current flowing through the coil of each of the plurality of magnetic poles when the conveying container approaches each of the plurality of the magnetic poles, and determines deterioration of the conveying surface based on the detected amplitude of the current.

2. The sample conveying device according to claim 1, wherein
the control unit includes an operation unit that calculates an estimated conveyance time according to a conveyance source, conveyance destination, conveyance path, and conveyance distance of the conveying container of the conveyance unit, and a moving time calculation unit that acquires the time required for an actual conveyance of the conveying container, and
the operation unit compares the time required for the actual conveyance of the conveying container with the estimated conveyance time, and when the time required for the actual conveyance is not within the estimated conveyance time, determines deterioration of the conveying surface based on the amplitude of the detected current.

3. The sample conveying device according to claim 1 or 2, wherein
the operation unit determines whether the conveying surface is deteriorated, and when it is determined that the conveying surface is deteriorated, determines that the conveying surface, where it determined that there is the deterioration, is not usable, and excludes the conveying surface from conveyance paths of the conveying container, thereby excluding the magnetic pole arranged at a position corresponding to the conveying surface, where it determined that there is the deterioration, and the magnetic pole arranged upstream thereof from the conveyance path of the conveying container.

4. The sample conveying device according to claim 1 or 2, further comprising:
a display unit, wherein
the operation unit determines deterioration of the conveying surface based on the amplitude of the detected current, and when it is determined that the conveying surface is not deteriorated, determines whether conveyance paths for which the moving time is longer than the estimated conveyance time include a conveyance path that cannot be excluded from the conveyance path for conveying the conveying container, and when it is determined that the conveyance path that cannot be excluded is included, displays on the display unit that the conveyance path cannot be excluded.

5. The sample conveying device according to claim 3, further comprising:
a display unit, wherein
the operation unit calculates the conveyance path of the conveying container by excluding the conveyance path, where it determined that there is the deterioration, calculates a processing capacity of the conveying container according to the calculated conveyance path, determines whether the calculated processing capacity is equal to or higher than a threshold value, and when it is determined that the processing capacity is equal to or higher than the threshold value, displays on the display unit that the conveyance path is to be changed, and when it is determined that the processing capacity is less than the threshold value, displays on the display unit that an upper surface of the conveying surface of the conveyance path, where it determined that there is the deterioration, is to be replaced.

6. The sample conveying device according to claim 4, wherein
the operation unit determines deterioration of the conveying surface based on the amplitude of the detected current, and when it is determined that the conveying surface is not deteriorated, determines whether the conveyance paths for which the moving time is longer than the estimated conveyance time include the conveyance path that cannot be excluded from the conveyance path for conveying the conveying container, and when it is determined that the conveyance path that cannot be excluded is not included, determines that abnormality is due to the presence of an obstacle on the conveying surface, and displays on the display unit that the conveyance path is to be changed.

7. A sample conveying method including a conveying container that includes a magnet or magnetic material and contains a sample, and a conveyance unit in which a plurality of magnetic poles, each of which includes a core and a coil, are arranged and the conveying container is moved on a conveying surface, controlling a voltage applied to the plurality of magnetic poles, detecting a position of the conveying container on the conveying surface, and controlling movement of the conveying container, the method comprising:
detecting an amplitude of a current flowing through the coil of each of the plurality of magnetic poles when the conveying container approaches each of the plurality of the magnetic poles; and
determining deterioration of the conveying surface based on the detected amplitude of the current.

8. The sample conveying method according to claim 7, wherein
the time required for an actual conveyance of the conveying container is compared with an estimated conveyance time according to a conveyance source, conveyance destination, conveyance path, and conveyance distance of the conveying container of the conveyance unit, and
when the time required for the actual conveyance is not within the estimated conveyance time, the deterioration of the conveying surface based on the amplitude of the detected current is determined.

9. The sample conveying method according to claim 7 or 8, wherein
it is determined whether the conveying surface is deteriorated, and when it is determined that the conveying surface is deteriorated, it is determined that the conveying surface, where it determined that there is the deterioration, is not usable, and the conveying surface is excluded from conveyance paths of the conveying container, thereby excluding the magnetic pole arranged at a position corresponding to the conveying surface determined to be deteriorated and the magnetic pole arranged upstream thereof from the conveyance path of the conveying container.

10. The sample conveying method according to claim 7 or 8, wherein
deterioration of the conveying surface is determined based on the amplitude of the detected current, and when it is determined that the conveying surface is not deteriorated, it is determined whether conveyance paths for which the moving time is longer than the estimated conveyance time include a conveyance path that cannot be excluded from the conveyance path for conveying the conveying container, and when it is determined that the conveyance path that cannot be excluded is included, a fact that the conveyance path cannot be excluded is displayed on the display unit.

11. The sample conveying method according to claim 9, wherein
the conveyance path of the conveying container by excluding the conveyance path, where it determined that there is the deterioration, is calculated, a processing capacity of the conveying container according to the calculated conveyance path is calculated, it is determined whether the calculated processing capacity is equal to or higher than a threshold value, and when it is determined that the processing capacity is equal to or higher than the threshold value, a fact that the conveyance path is to be changed is displayed on the display unit, and when it is determined that the processing capacity is less than the threshold value, a fact that an upper surface of the conveying surface of the conveyance, where it determined that there is the deterioration, is to be replaced is displayed on the display unit.

12. The sample conveying method according to claim 10, wherein
deterioration of the conveying surface is determined based on the amplitude of the detected current, and when it is determined that the conveying surface is not deteriorated, it is determined whether the conveyance paths for which the moving time is longer than the estimated conveyance time include a conveyance path that cannot be excluded from the conveyance path for conveying the conveying container, and when it is determined that the conveyance path that cannot be excluded is not included, it is determined that abnormality is due to the presence of an obstacle on the conveying surface, and a fact that the conveyance path is to be changed is displayed on the display unit.
